Europäisches Patentamt

European Patent Office

Office européen des brevets

(19)

(11) Veröffentlichungsnummer : **0 089 336**
**B1**

(12) **EUROPÄISCHE PATENTSCHRIFT**

(45) Veröffentlichungstag der Patentschrift :
26.03.86

(21) Anmeldenummer : 81902681.6

(22) Anmeldetag : 30.09.81

(86) Internationale Anmeldenummer :
PCT/DE 81/00158

(87) Internationale Veröffentlichungsnummer :
WO/8301307 (14.04.83 Gazette 83/09)

(51) Int. Cl.⁴ : **G 01 F 23/28**

(54) VORRICHTUNG ZUR FESTSTELLUNG UND/ODER KONTROLLE EINES BESTIMMTEN FÜLLSTANDES IN EINEM BEHÄLTER.

(43) Veröffentlichungstag der Anmeldung :
28.09.83 Patentblatt 83/39

(45) Bekanntmachung des Hinweises auf die Patenterteilung : 26.03.86 Patentblatt 86/13

(84) Benannte Vertragsstaaten :
AT CH FR GB LI NL

(56) Entgegenhaltungen :
DE-A- 2 855 643
DE-A- 2 933 618
DE-A- 3 011 603
DE-C- 582 760
GB-A- 1 013 186
US-A- 2 973 639
US-A- 3 100 390
US-A- 3 145 559
US-A- 3 625 058

(73) Patentinhaber : VEGA Grieshaber GmbH & Co.
Am Hohenstein 113 Postfach 10
D-7622 Schiltach (DE)

(72) Erfinder : BENZ, Karl
Gerbergasse 9
D-7622 Schiltach (DE)
Erfinder : KECH, Günter
Talstrasse 37
D-7620 Wolfach-Kirnbach (DE)

(74) Vertreter : Strasse, Joachim, Dipl.-Ing.
Strasse und Stoffregen European Patent Attorneys
Zweibrückenstrasse 17
D-8000 München 2 (DE)

## Beschreibung

Die Erfindung geht aus von einer Vorrichtung zur Feststellung eines bestimmten Füllstandes in einem Behälter mit einem Schwingungsgebilde, welches zwei mit gleicher Resonanzfrequenz und in entgegengesetztem Drehsinn schwingende und im Abstand zueinander koaxial angeordnete Schwingungselemente aufweist, von denen das äußere an einer als Rückholfeder wirkenden, senkrecht zur Schwingungselementenachse verlaufenden Membran angeordnet ist, wobei die Drehachse des äußeren Schwingungselements auf einem Durchmesser der Membran liegt und wobei das äußere Schwingungselement das innere, stabförmige Schwingungselement zumindest teilweise umfaßt, sodaß die Schwingungen des Schwingungsgebildes bei Berührung des Füllguts mit dem äußeren Schwingungselement gedämpft werden, mit Mitteln zur Anregung der Schwingungen und mit Einrichtungen zur Auslösung von Anzeige- und/oder Schaltvorgängen in Abhängigkeit von der Amplitude der Schwingungen, wie sie beispielsweise aus der DE-A1-29 33 618 bekannt geworden ist. Hierdurch wird eine überaus präzise Überwachung der Füllstandshöhe in einem Behälter ermöglicht, da keine Schwingungsenergie zur Behälterwandung übertragen wird.

Die Detektionsempfindlichkeit der bekannten Vorrichtung wird in gewissem Maße von den Einspannverhältnissen des Schwingungsgebildes beeinflußt. Außerdem wäre es wünschenswert, den Meßbereich noch auszuweiten. Demzufolge liegt der Erfindung die Aufgabe zugrunde, eine Vorrichtung der eingangs genannten Art derart weiterzubilden, daß ein Einsatz zur Bestimmung des Füllstandes nahezu beliebiger Füllgüter — also großer und geringer Dichte — ermöglicht wird und daß die Detektionsempfindlichkeit nahezu unabhängig von den Einspannverhältnissen des Schwingungsgebildes ist.

Die Erfindung geht von der Erkenntnis aus, statt des bisher eingeschlagenen Weges, mit zwei Schwingungselementen die Übertragung von Schwingungsenergie auf die Behälterwandung zu vermeiden oder zu minimieren, andere Überlegungen anzustellen, da nämlich zwei Grenzbedingungen mit jeweils unterschiedlichen physikalischen Voraussetzungen existieren ; der praktische Einsatz einer Füllstandsmeßvorrichtung wird sich zwischen diesen beiden Extremen abspielen. In einem Extremfall wird das Schwingungsgebilde in eine Behälterwandung mit unendlich gedachter Masse und Steifigkeit eingeschraubt. In diesem Fall ist die angestrebte Güte des vom Füllgut zu dämpfenden äußeren Schwingungselements nicht durch die Eigenschaften der Behälterwandung beeinträchtigt. Mit anderen Worten ist das innere Schwingungselement, das ein Gegenmoment aufzubringen hätte, überflüssig, da die als elastisches Element wirkende Membran vollkommen starr gelagert ist. In der anderen Grenzbedingung denkt man sich das Schwingungsgebilde unendlich elastisch frei im Raum aufgehängt, so daß das innere Schwingungselement ein gleich großes, jedoch entgegengesetzt wirkendes Schwingmoment zu dem des äußeren aufbringen muß, damit wiederum der Einschraubbereich des Schwingungsgebildes in der Behälterwandung in seiner Ruhelage verharrt. Tritt dieser Fall ein, so ist gleichfalls die hohe Gütebedingung gegeben.

Die Aufgabe wird dadurch gelöst, daß die Schwingungselemente eine gemeinsame Drehachse aufweisen und daß das innere Schwingungselement im Bereich der Drehachse eine als Rückholfeder wirkende Verjüngung aufweist.

In der Praxis werden sich nun Einschraubbedingungen für die erfindungsgemäße Vorrichtung ergeben, bei denen die erfindungsgemäße Vorrichtung teilweise eine Abstützung in der Behälterwandung erfährt und teilweise vom Gegenmoment des inneren Schwingungsgebildes gestützt wird. Durch die Merkmale der erfindungsgemäßen Vorrichtung ist es nun möglich, daß sich unter Beibehaltung einer stets gleich guten Detektionsempfindlichkeit eine automatische Anpassung an die jeweils vorliegenden Praxisbedingungen ergibt.

Durch die erfindungsgemäße Lehre wird unter anderem der Vorteil erzielt, daß eine automatische Anpassung des von dem inneren Schwingungselement ausgeübten Gegenschwingmoments an die Eigenschaften der Behälterwandung erfolgt und daß sich die erwähnte Unabhängigkeit von den Einspannverhältnissen ergibt, die sich in einer Erhöhung der Detektionsempfindlichkeit äußert. Auch sei erwähnt, daß sich die erfindungsgemäße Vorrichtung durch einen einfachen und robusten Aufbau auszeichnet.

Bevorzugte Ausführungsformen der Erfindung sind in den abhängigen Ansprüchen angegeben. Die Schwingungselemente weisen gleich große Massen und einen gemeinsamen Massenschwerpunkt auf. Des weiteren sind die Federkräfte der Membran und der Verjüngung so aufeinander abgestimmt, daß sich die durch die Schwingungselemente um die Drehachse hervorgerufenen Drehmomente gegenseitig aufheben.

Das äußere Schwingungselement ist in Ausgestaltung der Erfindung zumindest in dem Bereich rohrförmig ausgebildet, in dem das innere Schwingungselement umfaßt wird, wohingegen es an der Außenseite seines freien Endes vorzugsweise eine Paddelform aufweist, um eine höhere Meßgenauigkeit zu erzielen. Sowohl die Membran für das äußere Schwingungselement als auch zumindest der oberhalb der Verjüngung vorhandene Abschnitt des inneren Schwingungselementes sind mit dem Behältergehäuse starr verbunden.

Sowohl der Antrieb des Schwingungsgebildes als auch die Erfassung der Schwingungsamplitude erfolgt vorzugsweise mittels elektromechanischer Umformer in Form von piezoelektrischen Elementen, die diametral zueinander auf der Membran befestigt sind.

Die Erfindung wird nachstehend anhand zeichnerisch dargestellter Ausführungsbeispiele näher erläutert.

Es zeigen:

Figur 1 ein erstes Ausführungsbeispiel und
Figur 2 ein zweites Ausführungsbeispiel der erfindungsgemäßen Vorrichtung.

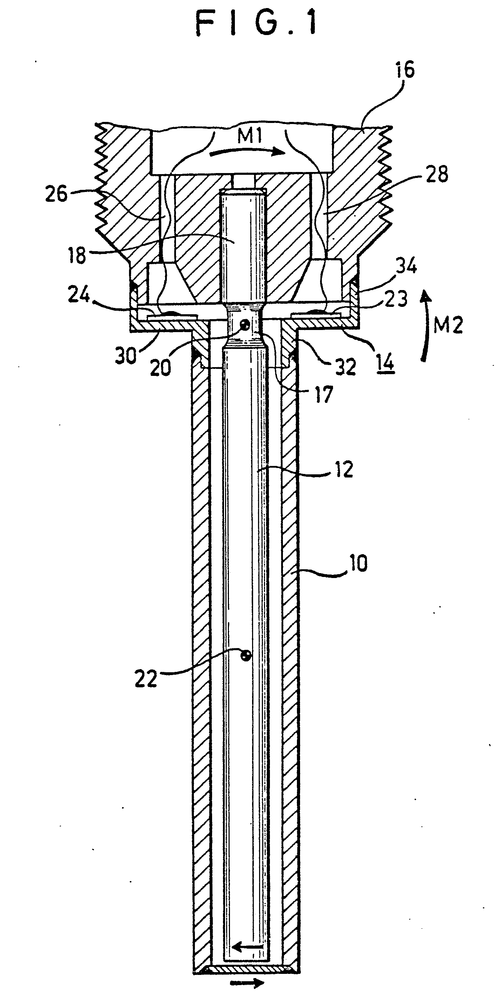

In Fig. 1 ist in Schnittdarstellung ein erstes Ausführungsbeispiel einer erfindungsgemäßen Vorrichtung zur Feststellung und/oder Kontrolle eines bestimmten Füllstandes in einem Behälter dargestellt, das aus zwei koaxial zueinander angeordneten Schwingungselementen 10 und 12 besteht, die sich zumindest teilweise im Abstand zueinander umfassen. Dabei ist im Ausführungsbeispiel das äußere Schwingungselement 10 im Bereich des inneren Schwingungselements 12 rohrförmig, das innere Schwingungselement 12 stabförmig ausgebildet. Das das innere Schwingungselement 12 nicht umschließende freie Ende des Schwingungselementes 10 ist vorzugsweise — jedoch nicht dargestellt — flachgequetscht, um eine Paddelform zu erhalten. Dadurch ergibt sich eine höhere Empfindlichkeit bei der Überwachung eines Füllstandes.

Das äußere Schwingungselement 10 ist an einem oberen freien Ende mit einer als Rückholfeder wirkenden Membran 14 verbunden, die ihrerseits starr mit einem Einschraubteil 16 an einer Behälterwandung verbunden ist. Hat die Membran 14 für das Schwingungselement 10 die Funktion einer Rückholfeder, so vollführt eine Verjüngung 17 im oberen Abschnitt des inneren Schwingungselements 12 die gleiche Wirkung. Wie die Fig. 1 verdeutlicht, ist dabei die Verjüngung 17 in der Höhe der Membran 14 angeordnet. Oberhalb der Verjüngung 17 ist der obere Abschnitt 18 des Schwingungselementes 12 starr mit dem Einschraubstück 16 verbunden. Das stabförmige Schwingungselement 12 und das rohrförmige Schwingungselement 10 sind nun derart ausgebildet, daß sie eine gemeinsame Drehachse 20 aufweisen. Außerdem weisen die Schwingungselemente 10 und 12 gleich große Massen und einen gemeinsamen Massenschwerpunkt 22 auf. Die Membran 14 und die Verjüngung 17 sind in ihrer Federkraft so aufeinander abgestimmt, daß sich die durch das äußere Schwingungselement 10 und das innere Schwingungselement 12, also den Stab und das Rohr, um die Drehachse 20 hervorgerufenen Drehmomente M 1 und M 2 jeweils gegenseitig aufheben.

Durch diese Voraussetzungen ist gewährleistet, daß die beiden Schwingungselemente 10 und 12 mit gleicher Resonanzfrequenz schwingen. Als Antriebssystem dient nun ein elektromechanischer Umformer in Form eines piezoelektrischen Elements 24, welches durch eine in der Resonanzfrequenz des Schwingungsgebildes pulsierende Gleichspannung erregt wird. Das piezoelektrische Element 24 ist auf einer Seite der Membran 14 angeordnet. Die pulsierende Ausdehnung in radialer Richtung des piezoelektrischen Elements bewirkt, daß eine ebensolche Ausdehnung auf der entsprechenden Seite der Membran erfolgt, wodurch das Rohr oder das äußere Schwingungselement 10 in Schwingung versetzt wird. Wird über den Einschraubteil 16 Schwingungsenergie abgeführt, so überträgt sich diese auf das stabförmige innere Schwingungselement 12, welches als Folge im entgegengesetzten Drehsinn zum äußeren Schwingungselement 10 schwingt. Dies gilt, wenn das Einschraubstück 16 bzw. die Behälterwandung nicht als unendlich steif und massebehaftet anzusehen ist. Bei unendlich großer Masse würde dagegen das innere Schwingungselement 12 in Ruhe bleiben.

Die Detektion erfolgt gleichfalls über einen elektromechanischen Umformer in Form eines piezoelektrischen Elements 23, welches diametral zu dem piezoelektrischen Element 24 auf der gegenüberliegenden Seite der Membran 14 angeordnet ist. Die durch die Schwingung hervorgerufene Dehnung der Membran 14 und des darauf befestigten piezoelektrischen Elements 23 erzeugt in diesem eine pulsierende Gleichspannung, die dann verschwindet, wenn das System durch Berührung des äußeren Schwingungselements 10 mit Füllgut gedämpft wird. Durch nicht dargestellte Einrichtungen erfolgt dann eine Auslösung von Anzeige- oder Schaltvorgängen. Verbindungen zwischen den piezoelektrischen Elementen 23 bzw. 24 mit einem Verstärker bzw. nachgeschalteten Schwellwertdiskriminatoren und Relais für Anzeige- oder Schaltvorgänge werden durch Bohrungen 26 und 28 im Einschraubstück 16 geführt.

Nach dem Ausführungsbeispiel der Fig. 1 wird die Membran 14 von einer Basisfläche 30 gebildet, die senkrecht zu den Schwingungselementenachsen verläuft und von der zwei Zylinderabschnitte unterschiedlicher Durchmesser in entgegengesetzten Richtungen abragen, von denen einer, 32, mit dem rohrförmigen äußeren Schwingungselement 10 verbunden ist und vorzugsweise fluchtend in dieses übergeht, wohingegen der andere Abschnitt 34 mit dem Einschraubstück 16 in der Form vorzugsweise eines zylinderförmigen Vorsprungs verbunden ist.

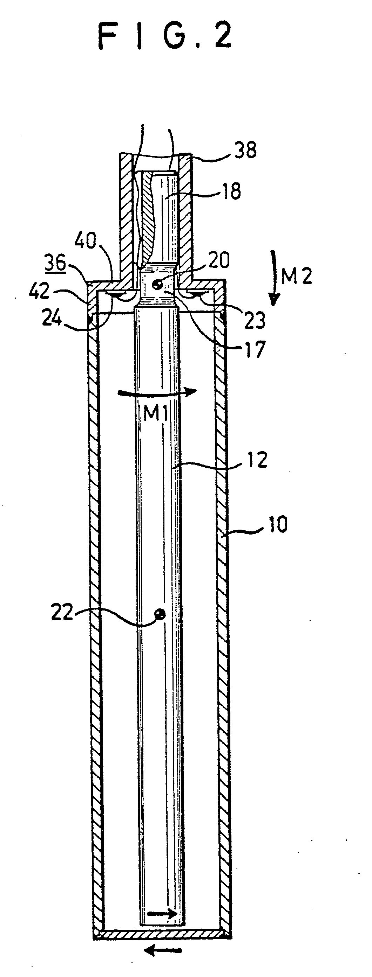

Das Ausführungsbeispiel gemäß Fig. 2 weicht von dem der Fig. 1 hinsichtlich der Ausbildung der Membran 36 und des Einschraubteils 38 ab. Ansonsten sind die anderen Elemente gleich ausgebildet, so daß die gleichen Bezugszeichen wie in Fig. 1 Verwendung finden. Eine eingehende Beschreibung erübrigt sich demzufolge.

Die Membran 36 nach Fig. 2 weist gleichfalls eine senkrecht zu den Schwingungselementenachsen verlaufende Basisfläche 40 auf, die unmittelbar mit dem Einschraubstück 38 starr verbunden ist. Die Verbindung zwischen der Membran 36 und dem äußeren Schwingungselement 10 erfolgt wie bei Fig. 1 gleichfalls über einen von der Basisfläche 40 abragenden zylinderförmigen Abschnitt 42, der fluchtend in das rohrförmige Schwingungselement 10 übergeht. Die Durchführung der elektrischen Verbindungsleitungen zwischen den piezoelektrischen Elementen 23 und 24 und nicht dargestellten Anzeige- und Auswerteeinrichtungen erfolgt nach dem Ausführungsbeispiel nach Fig. 2 durch innerhalb des oberen oberhalb der Verjüngung 17 liegenden Abschnitts 18 des inneren stabförmig ausgebildeten Schwingungselements 12. Auch ist vorzugsweise beim Ausführungsbeispiel nach der Fig. 2 das freie Ende des äußeren Schwingungselementes 10 paddelförmig ausgebildet, jedoch in der Zeichnung nicht dargestellt.

**Patentansprüche**

1. Vorrichtung zur Feststellung eines bestimmten Füllstandes in einem Behälter mit einem Schwingungsgebilde, welches zwei mit gleicher Resonanzfrequenz und in entgegengesetztem Drehsinn schwingende und im Abstand zueinander koaxial angeordnete Schwingungselemente (10, 12) aufweist, von denen das äußere (10) an einer als Rückholfeder wirkenden, senkrecht zur Schwingungselementenachse verlaufenden Membran (14) angeordnet ist, wobei die Drehachse (20) des äußeren Schwingungselements (10) auf einem Durchmesser der Membran (14) liegt und wobei das äußere Schwingungselement (10) das innere, stabförmige Schwingungselement (12) zumindest teilweise umfaßt, sodaß die Schwingungen des Schwingungsgebildes bei Berührung des Füllguts mit dem äußeren Schwingungselement (10) gedämpft werden, mit Mitteln (23, 24) zur Anregung der Schwingungen und mit Einrichtungen zur Auslösung von Anzeige- und/oder Schaltvorgängen in Abhängigkeit von der Amplitude der Schwingungen, dadurch gekennzeichnet, daß die Schwingungselemente (10, 12) eine gemeinsame Drehachse (20) aufweisen, und daß das innere Schwingungselement (12) im Bereich der Drehachse (20) eine als Rückholfeder wirkende Verjüngung (17) aufweist.

2. Vorrichtung nach Anspruch 1, dadurch gekennzeichnet, daß die Schwingungselemente (10, 12) gleich große Masse und im Ruhezustand einen gemeinsamen Massenschwerpunkt (22) aufweisen.

3. Vorrichtung nach Anspruch 1 oder 2, dadurch gekennzeichnet, daß die Federkräfte der Membran (14) und der Verjüngung (17) so aufeinander abgestimmt sind, daß sich die durch die Schwingungselemente (10, 12) um die Drehachse (20) hervorgerufenen Drehmomente gegenseitig aufheben.

4. Vorrichtung nach Anspruch 1 oder einem der folgenden Ansprüche, dadurch gekennzeichnet, daß sowohl der Antrieb des Schwingungsgebildes als auch die Erfassung der Schwingungsamplitude mittels elektromechanischer Umformer in Form von piezoelektrischen Elementen (23, 24) erfolgt, die diametral zueinander auf der Membran (14) befestigt sind.

5. Vorrichtung nach Anspruch 1 oder einem der folgenden Ansprüche, dadurch gekennzeichnet, daß das äußere Schwingungselement (10) zumindest im Bereich des inneren Schwingungselements (12) rohrförmig ausgebildet ist und an der Außenseite seines freien Endes eine Paddelform aufweist.

6. Vorrichtung nach Anspruch 3 oder einem der folgenden Ansprüche, dadurch gekennzeichnet, daß die Membran (14) und zumindest der oberhalb der Verjüngung (17) vorhandene Abschnitt (18) des inneren Schwingungselements (12) starr mit dem Behälter — vorzugsweise über ein Einschraubstück (16, 38) — verbunden sind.

**Claims**

1. Device for determining a particular filling level in a container with an oscillatory system, having two oscillation elements (10, 12) which oscillate with the same resonance frequency in the opposite direction of rotation and whicl. are arranged coaxially at a distance from each other, of which the exterior element (10) is arranged on a membrane (14) operating as a return spring and running at right angles to the axis of the oscillation element, where the axis of rotation (20) of the exterior oscillating element (10) lies on a diameter of the membrane (14) and where the exterior oscillating element (10) contains, at least partly, the inner rodshaped oscillation element (12) so that the oscillations of the oscillatory system are damped when the filling material comes into contact with the exterior oscillation element (10), with means (23, 24) to induce the oscillations and with devices to initiate indicating- and/or switching operations in dependence upon the amplitude of the oscillations, characterised in that the oscillation elements (10, 12) have a common axis of rotation (20) and that the inner oscillation element (12) has a tapering (17) acting as a return spring in the region of the axis of rotation (20).

2. Device according to Claim 1, characterized in that the oscillation elements (10, 12) have equal masses and, in a state of rest, have a common centre of mass (22).

3. Device according to Claim 1 or 2, characterized in that the spring tensions of the membrane (14) and the tapering (17) are co-ordinated to each other such that the moments of rotation brought about by the oscillation elements (10, 12) about the axis of rotation (20) mutually cancel each other.

4. Device according to Claim 1 or one of the subsequent claims, characterized in that both the drive of the oscillatory system and also the detection of the amplitude of oscillation takes place by means of electro-mechanical transformers in the form of piezoelectric elements (23, 24) which are attached to the membrane (14) diametrically to each other.

5. Device according to Claim 1 or one of the subsequent claims, characterized in that the exterior oscillation element (10) is constructed in tubular form at least in the region of the inner oscillation element (12) and is paddle-shaped on the outer side of its free end.

6. Device according to Claim 3 or one of the subsequent claims, characterized in that the membrane (14) and at least the section (18), above the tapering (17), of the inner oscillation element (12) is inflexibly connected with the container — preferably by means of an external screw part (16, 38).

**Revendications**

1. Dispositif permettant de vérifier qu'un niveau de remplissage déterminé est atteint dans un récipient et comportant un système oscillant qui comprend deux éléments oscillants (10, 12) qui sont montés coaxialement à une certaine distance l'un de l'autre et oscillent dans des sens de rotation inverses avec la même fréquence de résonance et dont l'un (10), qui est situé à l'extérieur, est associé à une membrane (14) orientée perpendiculairement à l'axe des éléments oscillants et agissant comme ressort de rappel, l'axe de rotation (20) de l'élément oscillant extérieur (10) se trouvant sur un diamètre de la membrane (14) et l'élément oscillant extérieur (10) entourant partiellement l'élément oscillant intérieur en forme de barre, de sorte que les oscillations du système oscillant sont amorties lorsque les matériaux de remplissage viennent en contact avec l'élément oscillant extérieur (10), des dispositifs (23, 24) provoquant les oscillations et des dispositifs déclenchant des signaux et/ou des opérations de commutation en fonction de l'amplitude des oscillations, caractérisé en ce que les éléments oscillants (10, 12) ont le même axe de rotation (20) et dans la zone de l'axe de rotation (20) l'élément oscillant intérieur (12) comporte une partie amincie (17) agissant comme ressort de rappel.

2. Dispositif suivant la revendication 1 caractérisé en ce que les éléments oscillants (10, 12) ont des masses égales et, à l'état de repos, ont le même centre de gravité (22).

3. Dispositif suivant l'une quelconque des revendications 1 ou 2 caractérisé en ce que les forces élastiques de la membrane (14) et de la partie amincie (17) sont adaptées l'une à l'autre de telle manière que les moments de rotation produits par les éléments oscillants (10, 12) autour de l'axe de rotation (20) se compensent réciproquement.

4. Dispositif suivant l'une quelconque des revendications 1 à 3 caractérisé en ce que l'entraînement du système oscillant et la détermination de l'amplitude d'oscillation s'effectuent au moyen de transducteurs électromécaniques constitués par des éléments piézo-électriques (23, 24) situés à des emplacements diamétralement apposés sur la membrane (14).

5. Dispositif suivant l'une quelconque des revendications 1 à 4 caractérisé en ce que l'élément oscillant extérieur (10) a, au moins dans la zone correspondant à l'élément oscillant intérieur (12), la forme d'un tube et du côté extérieur de son extrémité libre il a la forme d'une palette.

6. Dispositif suivant l'une quelconque des revendications 3 à 5 caractérisé en ce que la membrane (14) et au moins le secteur (18) de l'élément oscillant intérieur (12) qui se trouve au-dessus de la partie amincie (17), sont reliés rigidement au récipient, de préférence par l'intermédiaire d'une pièce (16, 18) fixée par vissage.

# F I G . 1

# F I G . 2